(19) **Europäisches Patentamt**

**European Patent Office**

**Office européen des brevets**

(11) **EP 1 401 127 A2**

(12) **EUROPEAN PATENT APPLICATION**

(43) Date of publication:
**24.03.2004 Bulletin 2004/13**

(51) Int Cl.⁷: $H04B\ 10/155$

(21) Application number: **03255705.0**

(22) Date of filing: **12.09.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **18.09.2002 JP 2002272108**

(71) Applicant: **Pioneer Corporation**
**Meguro-ku, Tokyo (JP)**

(72) Inventors:
• **Nohara, Manabu**
**Ohta-ku, Tokyo (JP)**
• **Ishitoya, Koichi**
**Ohta-ku, Tokyo (JP)**
• **Iwai, Tomoaki**
**Ohta-ku, Tokyo (JP)**

(74) Representative: **Haley, Stephen**
**Gill Jennings & Every,**
**Broadgate House,**
**7 Eldon Street**
**London EC2M 7LH (GB)**

(54) **Modulation apparatus**

(57) A modulating apparatus (110) modulates data to be transmitted according to a predetermined modulating system and generates a modulated wave, so that an optical device (122) is driven by the modulated wave and a light-modulated wave (10) is transmitted. As a result, an optical data communication can be realized. Since the optical device (122) has non-linearity, a cross modulated wave is generated by the modulation of the data. However, if a carrier frequency is chosen so that the cross modulated wave does not enter a frequency band for transmitting the data, the problem of the cross modulated wave can be removed and data transmission without distortion can be achieved. The cost can be low if an LED is utilized as the optical device. Also, high-speed data transmission is possible if a multi-value modulating system is utilized.

## Description

The present invention relates to optical communication which utilizes an optical device such as an LED, and specially relates to a setting condition of a carrier frequency.

Description of Related Art:

Optical communication which utilizes an optical device such as an LED is known. In the above optical communication which utilizes the optical device, a modulating-demodulating system which carries information by a phase of a signal is accepted. However, the system which carries the information on amplitude of the signal is quite difficult to realize because the optical device such as the LED has non-linear characteristic.

The present invention has been achieved in order to solve the above problem and the like, and the object of the present invention is to provide a modulation apparatus capable of setting frequency for high-speed data communication without distortion, by utilizing an optical device having non-linearity.

According to one aspect of the present invention, there is provided a modulating apparatus for optical communication which modulates a carrier by a modulation signal and generates a modulated wave to be supplied to a light emitting diode, wherein modulation is executed to satisfy:

$$fd > f1,$$

$$fu < f2,$$

and

$$fd > fu/2$$

when a lower limit frequency of a use-permitted frequency band is f1 [Hz] , an upper limit frequency of the use-permitted frequency band is f2 [Hz] , a lower limit side band of the modulated wave is fd[Hz] , and an upper limit side band of the modulated wave is fu[Hz].

According to another aspect of the present invention, there is provided a modulating apparatus for optical communication which modulates a carrier by a modulation signal and generates a modulated wave to be supplied to a light emitting diode, wherein modulation is executed to satisfy:

$$fd > f1,$$

$$fu < f2,$$

and

$$fc > 3(1+\alpha)\, fsr/2$$

when a lower limit frequency of a use-permitted frequency band is f1 [Hz] , an upper limit frequency of the use-permitted frequency band is f2 [Hz], a carrier frequency is fc[Hz], a rolloff factor is $\alpha$, and a symbol rate of the modulation signal is fsr.

In the above modulating apparatus, the modulation may be executed according to a modulating system including amplifier modulation.

According to still another aspect of the present invention, there is provided a transmitting apparatus including: a modulating apparatus for optical communication which modulates a carrier by a modulation signal and generates a modulated wave to be supplied to a light emitting diode, wherein modulation is executed to satisfy:

$$fd > f1,$$

$$fu < f2,$$

and

$$fd > fu/2$$

when a lower limit frequency of a use-permitted frequency band is f1 [Hz ] , an upper limit frequency of the use-permitted frequency band is f2 [Hz], a lower limit side band of the modulated wave is fd[Hz] , and an upper limit side band of the modulated wave is fu[Hz] ; and a light transmitting unit having the light emitting diode which is driven by the modulated wave generated by the modulating apparatus and outputs a light-modulated wave.

According to still another aspect of the present invention , there is provided a transmitting apparatus including: a modulating apparatus for optical communication which modulates a carrier by a modulation signal and generates a modulated wave to be supplied to a light emitting diode, wherein modulation is executed to satisfy:

$$fd > f1,$$

$$fu < f2,$$

and

$$fc > 3(1+\alpha) \, fsr/2$$

when a lower limit frequency of a use-permitted frequency band is f1[Hz], an upper limit frequency of the use-permitted frequency band is f2 [Hz] , a carrier frequency is fc [Hz] , a rolloff factor is $\alpha$, and a symbol rate of the modulation signal is fsr; and a light transmitting unit having the light emitting diode which is driven by the modulated wave generated by the modulating apparatus and outputs a light-modulated wave.

According to still another aspect of the present invention, there is provided a computer program product for making a computer function as a modulating apparatus, by executing the computer program, for optical communication which modulates a carrier by a modulation signal and generates a modulated wave to be supplied to a light emitting diode wherein modulation is executed to satisfy:

$$fd > f1,$$

$$fu < f2,$$

and

$$fd > fu/2$$

when a lower limit frequency of a use-permitted frequency band is f1[Hz], an upper limit frequency of the use-permitted frequency band is f2 [Hz] , a lower limit side band of the modulated wave is fd[Hz] , and an upper limit side band of the modulated wave is fu[Hz].

According to still another aspect of the present invention, there is provided a computer program product for making a computer function as a modulating apparatus, by executing the computer program, for optical communication which modulates a carrier by a modulation signal and generates a modulated wave to be supplied to a light emitting diode, wherein modulation is executed to satisfy:

$$fd > f1,$$

$$fu < f2,$$

and

$$fc > 3(1+\alpha) \, fsr/2$$

when a lower limit frequency of a use-permitted frequency band is f1 [Hz] , an upper limit frequency of the use-permitted frequency band is f2 [Hz] , a carrier frequency is fc[Hz] , a rolloff factor is $\alpha$, and a symbol rate of the modulated signal is fsr.

A modulating apparatus modulates data to be transmitted according to a predetermined modulating system and generates a modulated wave, so that an optical device is driven by the modulated wave and a light-modulated wave is transmitted. As a result, an optical data communication can be realized. Since the optical device has a non-linearity, a cross modulated wave is generated in the modulation of the data to be modulated. However, if a carrier frequency is chosen so that the cross modulated wave does not enter a frequency band for transmitting the data, the problem of the cross modulated wave can be removed and data transmission without distortion can be achieved. The cost can be low if an LED is utilized as the optical device. Also, high-speed data transmission is possible if a multi-value modulating system is utilized.

The nature, utility, and further features of this invention will be more clearly apparent from the following detailed description with respect to preferred embodiment of the invention when read in conjunction with the accompanying drawings briefly described below.

FIG. 1 shows a relationship between a use-permitted frequency band and a modulated wave frequency band in a general communication system.

FIGS. 2A and 2B show a basic configuration of an optical communication system according to a first embodiment of the present invention, and configurations of a transmitting apparatus and a receiving apparatus thereof.

FIGS. 3A and 3B show configurations of a modulating unit and a demodulating unit shown in FIG. 2B.

FIGS. 4A and 4B show configurations of a light transmitting unit and a light receiving unit shown in FIG. 2B.

FIG. 5 shows a frequency allocation according to the first embodiment.

FIGS. 6A and 6B show configurations of a transmitting apparatus and a receiving apparatus according to a second embodiment of the present invention.

FIG. 7 shows a frequency allocation according to the second embodiment.

FIGS. 8A and 8B show configurations of a transmitting unit and a receiving unit according to a third embodiment of the present invention.

FIG. 9 shows a frequency allocation according to the third embodiment.

FIGS. 10A and 10B show configurations of a transmitting unit and a receiving unit according to a fourth embodiment of the present invention.

FIGS. 11A and 11B show configurations of a light transmitting unit and a light receiving unit according to the embodiment of the present invention.

FIG. 12 shows a frequency allocation according to the fourth embodiment of the present invention.

FIG. 13 shows a diagram explaining a rolloff factor.

FIG. 14 shows an application example of the present invention.

The preferred embodiments of the present invention will now be described below with reference to the attached drawings.

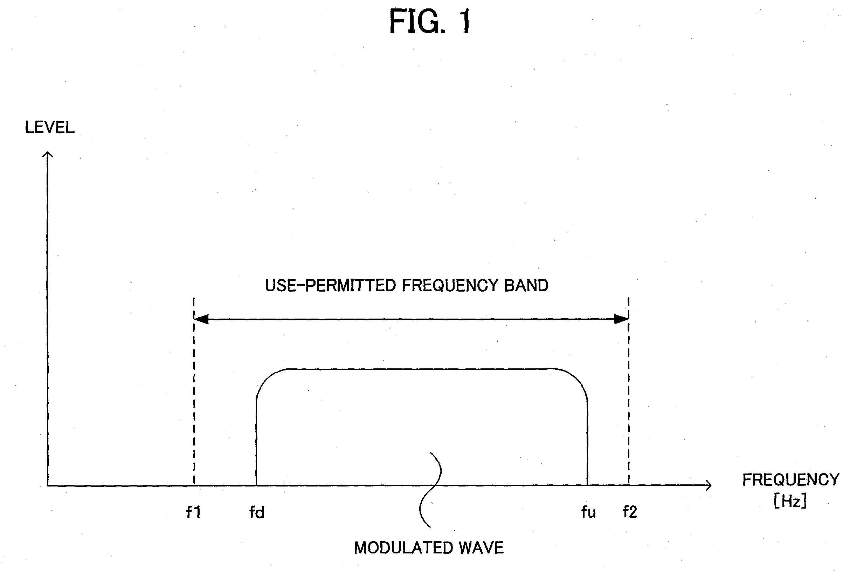

FIG. 1 shows a relationship between the use-permitted frequency band and the modulated wave frequency band in a general communication. Generally, the modulated wave is set so as to have its upper limit frequency and lower limit frequency within the use-permitted frequency band. In an example of FIG. 1, the frequency is set so that the modulated wave has the lower limit frequency fd and the upper limit frequency fu within the use-permitted frequency band f1 to f2 [Hz], and thus the modulated wave is within the use-permitted frequency band.

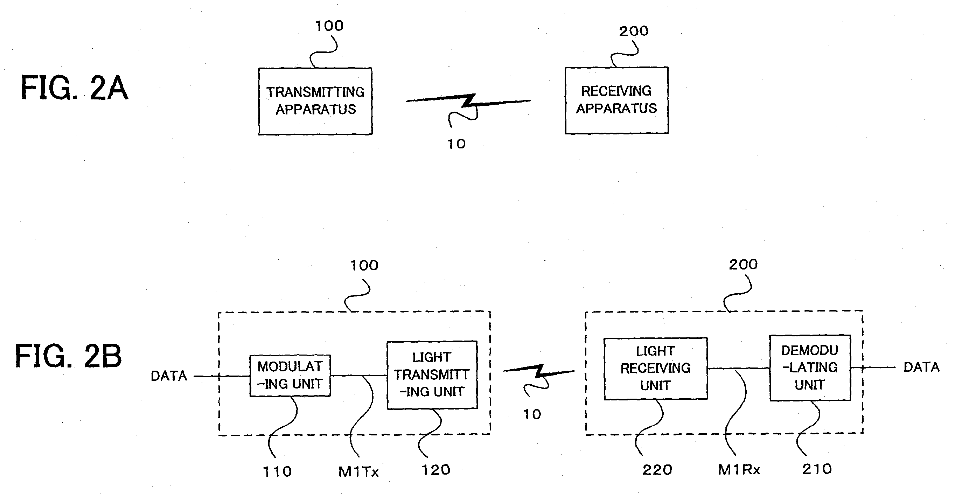

FIG. 2A shows a basic configuration of an optical communication system according to a first embodiment of the present invention. A light-modulated wave 10 is transmitted from the transmitting apparatus 100, and is received by the receiving apparatus 200.

FIG. 2B shows configurations of the transmitting apparatus 100 and the receiving apparatus 200. As shown in FIG. 2B, the transmitting apparatus 100 includes a modulating unit 110 and a light transmitting unit 120. Data to be transmitted is input to the modulating unit 110 and is modulated to generate the modulated wave M1Tx, which is supplied to the light transmitting unit 120. The light transmitting unit 120 converts the modulated wave M1Tx into a light signal, and transmits the signal as the light-modulated wave 10.

The receiving apparatus 200 includes a light receiving unit 220 and a demodulating unit 210 . The light receiving unit 220 receives the light-modulated wave 10, converts it into an electric signal to generate the modulated wave M1Rx, and supplies it to the demodulating unit 210. The demodulating unit 210 executes a demodulating process according to a modulating system of the modulating unit 110 in the transmitting apparatus 100, and restores the data.

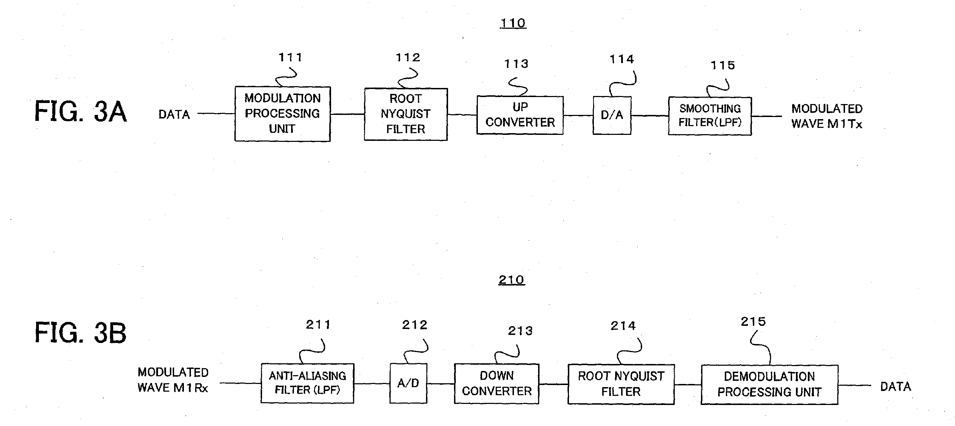

FIG. 3A shows the configuration of the modulating unit 110. The modulating unit 110 includes a modulation processing unit 111, a root nyquist filter 112 , an up converter 113, a D/A converter 114 and a smoothing filter 115. The data is processed by a predetermined modulation by the modulation processing unit 111, and a frequency band limitation is executed on the data by the root nyquist filter 112. Afterward, the data is up-converted to a carrier frequency by the up converter 113. The signal after being converted to the carrier frequency is converted to an analog signal by the D/A converter 114, and the folding component due to the D/A conversion is eliminated by the smoothing filter 115, which is a lowpass filter. In that way, the modulated wave M1Tx is generated.

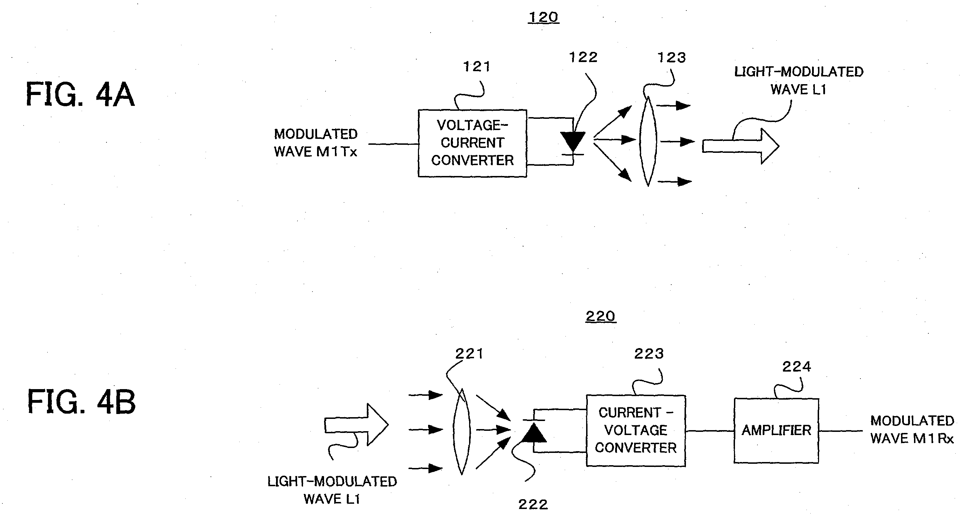

FIG. 4A shows the configuration of the light transmitting unit 120. The light transmitting unit 120 includes a voltage-current converter 121, an optical device 122 and a lens 123. It is noted that a laser diode, an SLD (Super Luminescent Diode) which is an intermediate device of an LED and a laser, and an LED can be utilized as the optical device 122. The voltage-current converter 121 converts the voltage of the modulated wave M1Tx to the current, and generates the current to be supplied to the optical device 122. The optical device 122 is driven by the generated current to emit the light-modulated wave L1. The light-modulated wave L1 is collected by the lens 123 and is transmitted.

FIG. 4B shows the configuration of the light receiving unit 220. The light receiving unit 220 includes a lens 221, an optical device 222, a current-voltage converter 223, and an amplifier 224. The lens 221 collects the light-modulated wave L1 and transmits it to the optical device 222 . The optical device 222 outputs the current according to a received light quantity, and the current-voltage converter 223 converts the current into the voltage to supply it to the amplifier 224. The amplifier 224 amplifies the input signal at a predetermined rate and outputs the modulated wave M1Rx.

FIG. 3B shows the configuration of the demodulating unit 210. The demodulating unit 210 includes an anti-aliasing filter 211, an A/D converter 212, a down converter 213, a root nyquist filter 214 and a demodulation processing unit 215 . The modulated wave M1Rx is input to the anti-aliasing filter 211 and its frequency-band is limited. Then, the modulated wave M1Rx is converted to a digital signal by the A/D converter 212. Since the digital signal is at the carrier frequency, the signal is frequency-converted to a base band by the down converter 213. Then, the signal is frequency-band-limited to the use frequency band by the root nyquist filter 214, and the original data is restored by the demodulation processing unit 215.

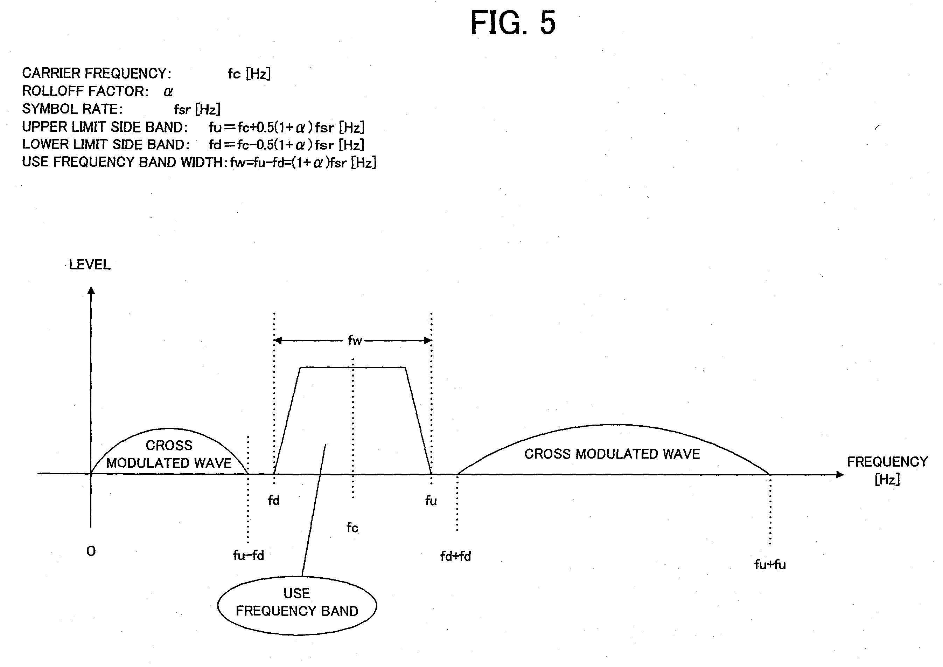

As described above, data communication is executed from the transmitting apparatus 100 to the receiving apparatus 200 by utilizing the optical device. Next, a frequency allocation in this case will be explained. FIG. 5 shows the frequency allocation according to this embodiment. As shown in FIG. 5, it is prescribed that the carrier frequency is fc, the rolloff factor is $\alpha$, the symbol rate is fsr, the upper limit sideband is fu, the lower limit sideband is fd, and a use frequency band width is fw.

In a case that the data communication is executed by utilizing the optical device, a secondary distortion takes place due to the non-linearity of the optical device. For the distortion, the multiplication of the frequency components within the use frequency band becomes a cross modulated wave. A multiplication is expressed by the components of an addition and a subtraction of each frequency. Thus, as to the cross modulated wave which appears at the frequency higher than the use frequency band, the lower limit of the cross modulated wave is fd+fd, and the upper limit thereof is fu+fu. In addition, as to the lower frequency, the upper limit of the cross modulated wave is fu-fd, and the lower limit thereof is fd-fd (=0) . This is shown in FIG. 5.

Next, the rolloff factor will be explained briefly. The rolloff factor is a parameter which determines a characteristic of the nyquist filter. According to the embodiment, the rolloff filter prescribes the characteristics of the root nyquist filters 112 and 214 shown in FIGS. 3A and 3B. The rolloff factor $\alpha$ takes a value between 0 and 1, and the nyquist filter has the characteristic of a steep ideal filter when $\alpha$ is equal to 0 ($\alpha$=0).

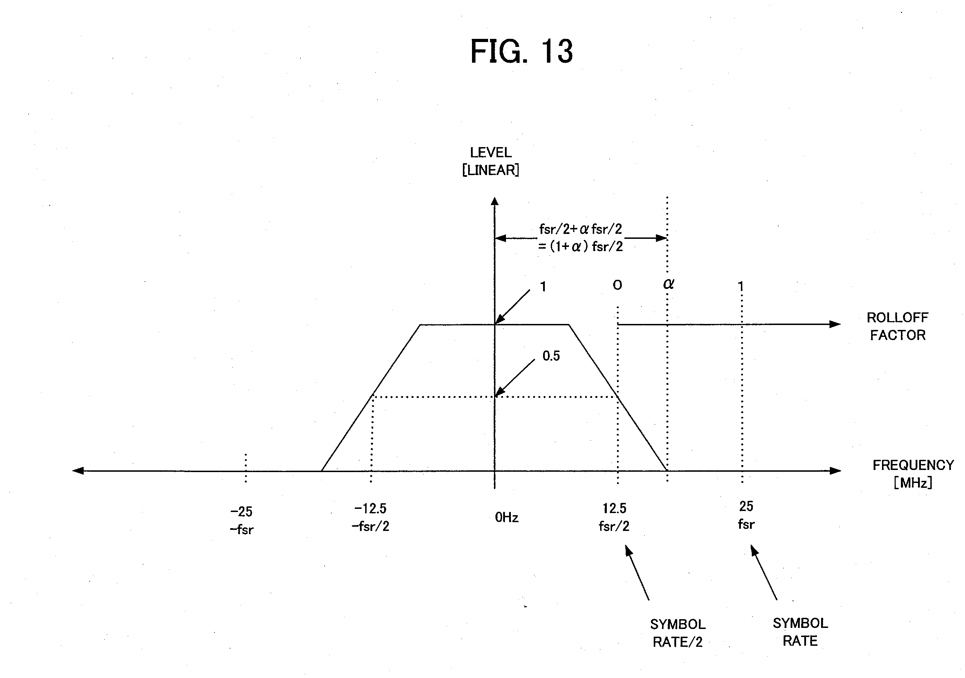

FIG. 13 shows the frequency characteristics obtained in a case that the nyquist filter with the rolloff factor $\alpha$ is applied to the signal of symbol rate 25 MHz. A vertical line is drawn at the frequency of a half symbol rate (symbol rate/2) , and a point symmetry slope is drawn so that the gain at the frequency becomes 0. 5 by the linear conversion. A vertical line is drawn at the frequency at which the slope crosses Level 0. That is the point of the rolloff factor $\alpha$. It is the half frequency of the symbol rate that $\alpha$ is equal to 0 ($\alpha$=0), and it is the frequency of the symbol rate that $\alpha$ is equal to 1 ($\alpha$=1). Therefore, the frequency at the point of the rolloff factor $\alpha$ can be expressed as below:

$$\text{fsr/2} + \alpha\text{fsr/2} = (1+\alpha)\text{fsr/2 [Hz]} \tag{1}$$

Thus, the frequency allocation of the nyquist filter which is formed by the root nyquist filters 122 and 214 are as follows (See. FIG. 5).

Since the carrier frequency is fc [Hz] , the rolloff factor is $\alpha$ and the symbol rate is fsr [Hz] , according to the rolloff factor $\alpha$ (formula 1),

$$\text{the upper limit sideband: fu = fc + (1+}\alpha\text{)fsr/2 [Hz]} \qquad (2)$$

$$\text{the lower limit sideband: fd = fc -(1+}\alpha\text{)fsr/2 [Hz]} \qquad (3)$$

$$\text{the use frequency band width: fw = fu - fd = (1+}\alpha\text{)fsr [Hz] .}$$

Here, conditional formulas with which the cross modulated wave does not enter the use frequency band fd to fu [Hz] are:

$$\text{fu < fd + fd} \qquad (4),$$

and

$$\text{fd > fu - fd} \qquad (5).$$

Provided that the formulas (2) and (3) are substituted to the formula (4), the following formulas are obtained:

$$\text{fc + (1+}\alpha\text{)fsr/2 < 2(fc - (1+}\alpha\text{)fsr/2)}$$

$$\text{fc + (1+}\alpha\text{)fsr/2 < 2fc - (1+}\alpha\text{)fsr}$$

$$\text{(1+}\alpha\text{)fsr/2 < fc - (1+}\alpha\text{)fsr}$$

$$\text{3(1+}\alpha\text{)fsr/2 < fc} \qquad (6).$$

Provided that the formulas (2) and (3) are substituted to the formula (5), the following formulas are obtained:

$$\text{fc - (1+}\alpha\text{)fsr/2 > fc + (1+}\alpha\text{)fsr/2 - (fc - (1+}\alpha\text{)fsr/2)}$$

$$\text{fc - (1+}\alpha\text{)fsr/2 > (1+}\alpha\text{)fsr/2 + (1+}\alpha\text{)fsr/2}$$

$$\text{fc - (1+}\alpha\text{)fsr/2 > (1+}\alpha\text{)fsr}$$

$$\text{fc > (1+}\alpha\text{) fsr + (1+}\alpha\text{) fsr/2}$$

$$\text{fc > 3(1+}\alpha\text{) fsr/2} \qquad (7).$$

Since the formulas (6) and (7) have the identical meaning, the conditional formula with which the cross modulated wave does not enter the use frequency band fd to fu [Hz] is:

$$\text{fc > 3(1+}\alpha\text{)fsr/2} \qquad (8).$$

This formula provides a method of choosing the carrier frequency fc in modulation-demodulation by utilizing the optical device. Namely, if the carrier frequency fc is determined in order to satisfy the conditional formula, the secondary distortion does not take place because the cross modulated wave does not enter the use frequency band even though the optical device having non-linearity is utilized. Therefore, the data communication in a multi-value modulating system, in which the information can be also carried by the amplitude, is possible with the optical device having non-linearity. High-speed data transmission is also possible in the multi-value modulating system. Further, if the LED is utilized as the optical device, a lower cost can be realized.

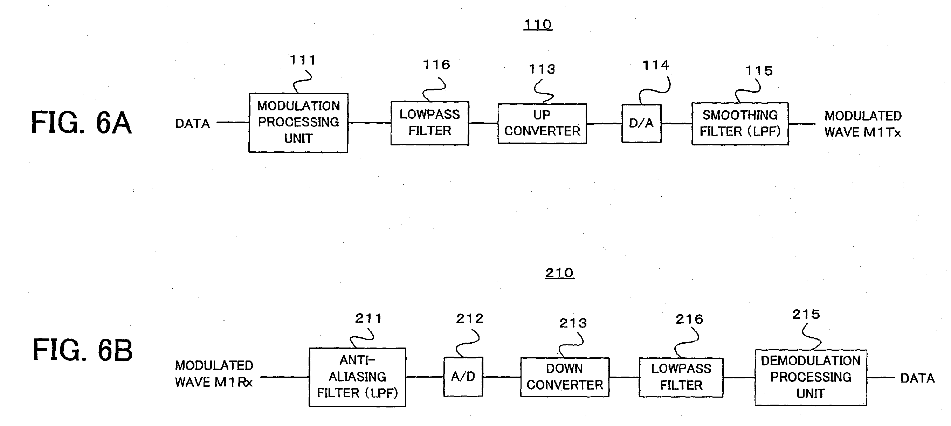

Next, a second embodiment according to the present invention will be explained. FIG. 6A shows the configuration of the modulating unit 110 in the transmitting apparatus 100 according to the second embodiment, and FIG. 6B shows the configuration of the demodulating unit 210 in the receiving apparatus 200. As understood by comparing FIGS. 3A and 3B with FIGS. 6A and 6B, a lowpass filters 116 and 216 are utilized in the second embodiment instead of the root nyquist filters 112 and 214 in the first embodiment. Therefore, the rolloff factor $\alpha$ is not utilized as the parameter in the design of the frequency. The other configurations are identical with those in the first embodiment.

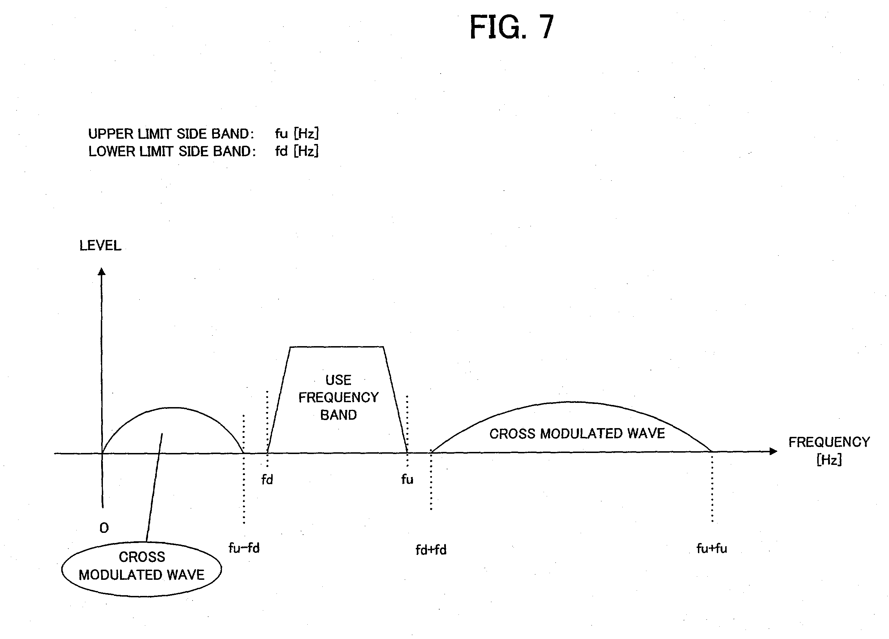

FIG. 7 shows the frequency allocation according to the second embodiment. As seen from FIG. 7 , the conditional formulas with which the cross modulated wave does not enter the use frequency band fd to fu [Hz] for the data communication according to the present invention are:

$$fu < fd + fd, \text{ and } fd > fu - fd \tag{9}.$$

By solving the two conditional formulas (9),

$$fu < 2fd, \text{ and } 2fd > fu \tag{10},$$

which can be expressed as:

$$fd > fu/2 \tag{11}.$$

This is the frequency condition in a case that the frequency band for the data communication is limited by a general lowpass filter, not by the nyquist filter.

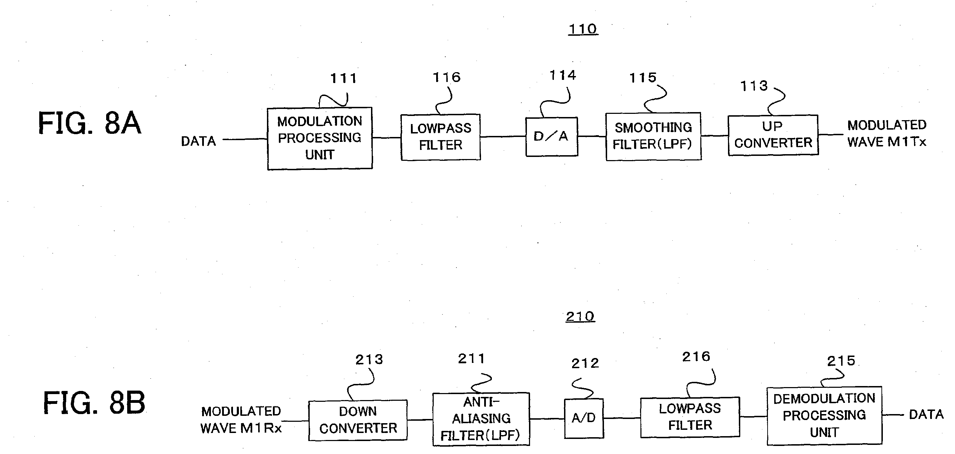

Next, a third embodiment of the present invention will be described. FIG. 8A shows the configuration of the modulating unit 110 in the transmitting apparatus 100 according to the third embodiment, and FIG. 8B shows the configuration of the demodulating unit 210 in the receiving apparatus 200. Though the up-conversion to the carrier frequency on the side of the transmitting apparatus and a down-conversion from the carrier frequency to the base band on the side of the receiving apparatus are executed by the digital signal in the second embodiment, the up-conversion and the down-conversion are executed by the analog signal in the third embodiment differently from the second embodiment. Other than that point, the third embodiment is basically identical with the first embodiment.

Specifically, as shown in FIG. 8A, the signal from the modulation processing unit 111 is frequency-band-limited to the use frequency band by the lowpass filter 116, and then converted to the analog signal by the D/A converter 114. The folding component is eliminated from the obtained analog signal by the smoothing filter 115, and the signal is frequency-converted to the carrier frequency by the up converter 113. On the other hand, on the side of the receiving apparatus, the modulated wave is frequency-converted to the base band by the down converter 213 as shown in FIG. 8B. Then, the modulated wave is frequency-band-limited by the anti-aliasing filter 211, and is converted to the digital signal by the A/D converter 212. Further, the digital signal is frequency-band-limitedto the use frequency bandby the lowpass filter 216. The digital signal thus obtained is demodulated in the demodulation processing unit 215 to obtain the original data.

Next, a fourth embodiment of this invention will be explained with reference to the attached drawings.

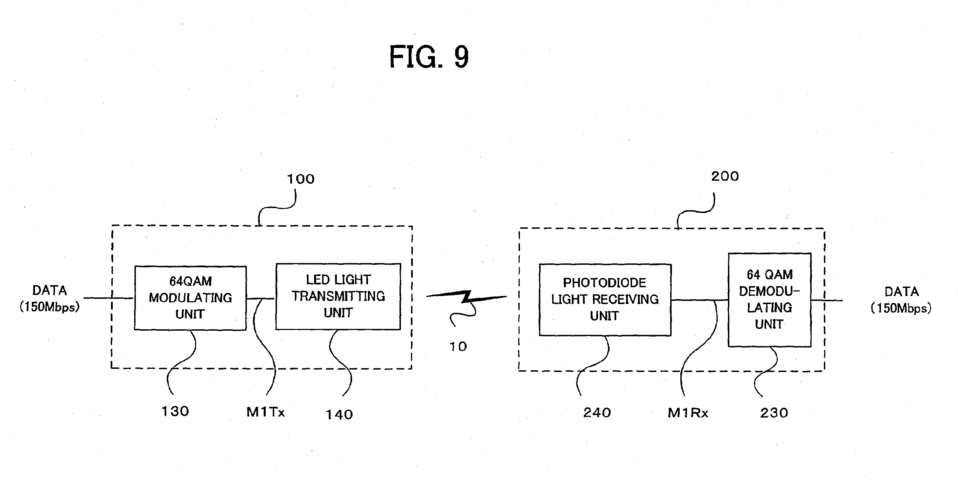

FIG. 9 shows the configuration of the optical communication system according to the fourth embodiment of the present invention. As shown in FIG. 9, the optical communication system of the embodiment includes the transmitting apparatus 100 and the receiving apparatus 200, and transmits the light-modulated wave 10 from the transmitting apparatus 100 to the receiving apparatus 200. The transmitting apparatus 100 includes a 64 QAMmodulating unit 130 and an LED light transmitting unit 140. The receiving apparatus 200 includes a photodiode light receiving unit 240 and a 64 QAM demodulating unit 230.

In this embodiment, an light space high-speed data transfer according to a 64 QAM modulating-demodulating system by utilizing the LED is realized. The data rate is 150 Mbps, which is very high speed. First, serial data of 150 Mbps being the original data is input to the 64 QAM modulating unit 130 and the modulated wave M1Tx is output. The modulated wave M1Tx reaches the LED light transmitting unit 140, and the light (infrared) modulated wave 10 by the LED is transmitted. The light-modulated wave 10 propagated via the space is photoelectrically-converted by the photodiode light receiving unit 240. The photoelectrically-converted modulated wave M1Rx is input to the 64 QAM demodulating unit 230, and the serial data of 150 Mbps is output.

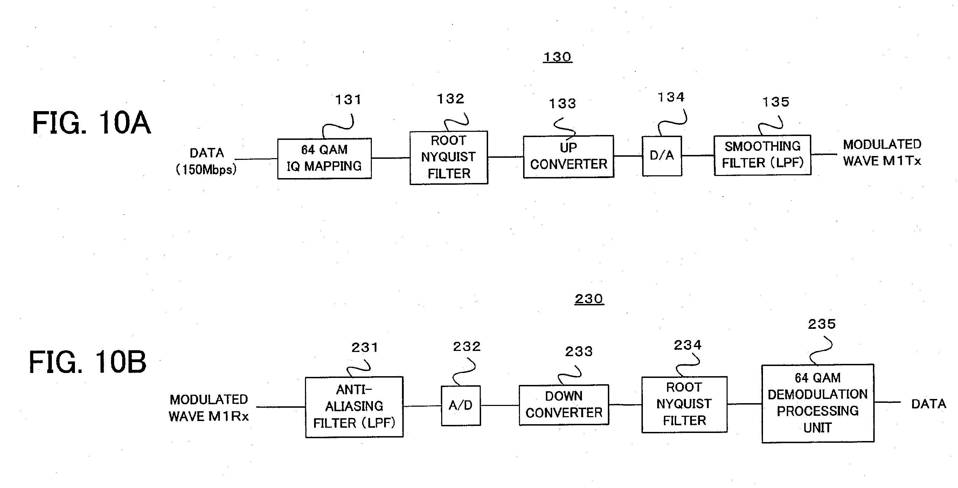

FIG. 10A shows the configuration of the 64 QAM modulating unit 130. The 64 QAM modulating unit 130 includes a 64 QAM-IQ mapping processing unit 131, a root nyquist filter 132, an up converter 133, a D/A converter 134 and a smoothing filter 135.

The data of data rate 150 Mbps is input to the 64 QAM-IQ mapping processing unit 131 and is serial-parallel converted. The data of IQ is input to the root nyquist filter 132, to which the carrier frequency 50 MHz is complex-multiplied by the up converter 133. At this time, only a real number portion is D/A-converted by the D/A converter 134. Afterward, the data is frequency-band-limited by the smoothing filter (LPF) 135 at a cut-off frequency 75 MHz, and is output as the modulated wave M1Tx.

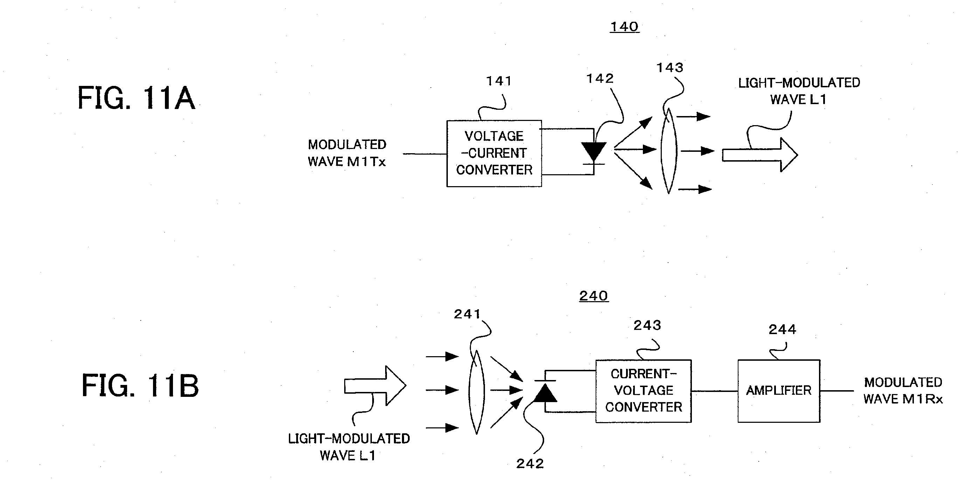

FIG. 11A shows the configuration of the LED light transmitting unit 140. The LED light transmitting unit 140 includes a voltage-current converter 141, an LED 142 and a lens 143. The voltage of the modulated wave M1Tx of 64 QAM is input to the voltage-current converter 141, where the voltage-current conversion is executed. The current obtained by the conversion drives the LED 142 to emit the infrared radiation. The infrared radiation, which is a scattering light, is condensed by the lens 143 to be a beam having a directivity, and is output as the light-modulated wave L1.

FIG. 11B shows the configuration of the photodiode light receiving unit 240. The photodiode light receiving unit 240 includes a lens 241, a photodiode (PD) 242, a current-voltage converter 243 and an amplifier 244. The light-modulated wave L1 of 64 QAM is condensed by the lens 241, and its light energy is converted to the current by the photodiode 242. The obtained current is current-voltage-converted by the current-voltage converter 243. The obtained voltage is amplified by the amplifier 244, and the modulated wave M1Rx is output.

FIG. 10B shows the configuration of the 64 QAM demodulating unit 230. The 64 QAM demodulating unit 230 includes an anti-aliasing filter 231, anA/D converter 232, a down converter 233, a root nyquist filter 234 and a 64 QAM demodulating unit 235. The modulated wave M1Rx is frequency-band-limited by the anti-aliasing filter 231 (the cut-off frequency is 75 MHz) , and is A/D converted by the A/D converter 232. Then, the carrier frequency 50 MHz is multiplied by the modulated wave by the down converter 233, and is down-converted to the base band signal, which is then filteredby the root nyquist filter 234. Thereafter, the filtered signal is QAM-demodulated in the 64 QAM demodulation processing unit 235, and the serial data of the 150 Mbps, which is the original data, is output.

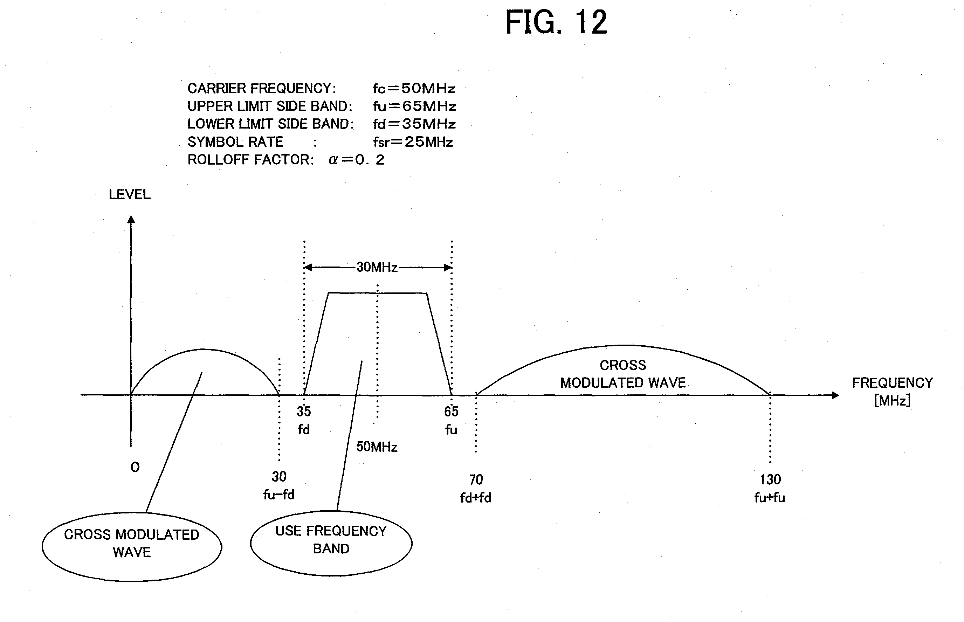

Next, the frequency allocation according to this embodiment will be explained. FIG. 12 shows the frequency allocation in this embodiment. FIG. 12 also shows the specification of each frequency and the parameter. Here, the secondary distortion takes place due to the non-linearity of the optical device. For the distortion, the multiplication of the frequency component of the use frequency band become the cross modulated wave. The multiplication is expressed by the components of the addition and the subtraction of each frequency. Thus, as to the cross modulated wave which appears at the frequency higher than the use frequency band, the lower limit of the cross modulated wave is fd+fd, and the upper limit thereof is fu+fu. As to the frequency lower than the use frequency band, the upper limit of the cross modulated wave is fu-fd, and the lower limit thereof is fd-fd, which is equal to 0. Thus, since the cross modulated wave does not enter the use frequency band, there is no adverse effect caused by the cross modulated wave in the method of choosing the carrier frequency.

According to the embodiment, the distortion (an intersymbol interference) can be prevented because the cross modulated wave does not enter the use frequency band of the data communication, even though the optical device such as the LED having non-linearity is utilized. Therefore, it is possible to use the multi-value modulation system such as the 64 QAM, in which the information is carried on the amplitude of the signal. As a result, the high-speed data transmission is achieved.

The up-conversion and the down-conversion are executed by the digital signal processing in the above embodiment, in which the digital signal processing is made easier by setting the carrier frequency to be the integer times, i.e. , twice, of the symbol rate. Further, since the LED is utilized as the optical device, the lower cost can be realized.

[Application]

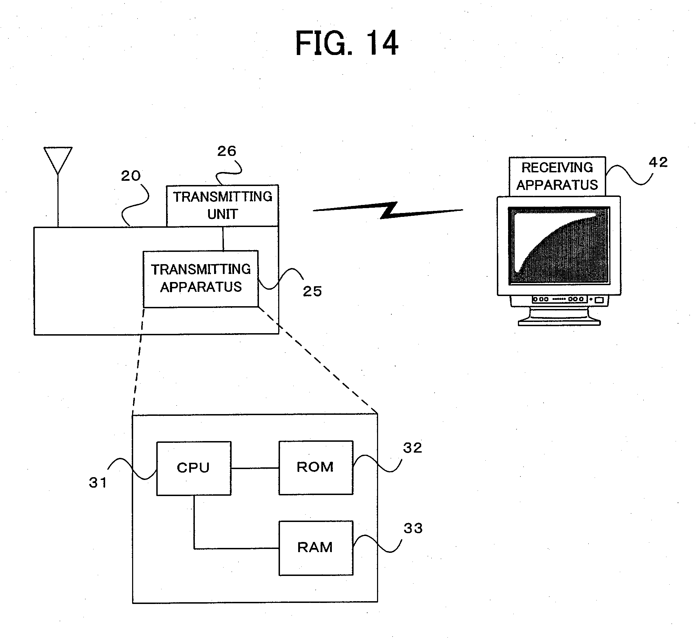

Next, an application of the optical communication according to the present invention will be described. A communication method which utilizes the optical device according to the present invention and a method of setting the frequency thereof can be applied to the system shown in FIG. 14. In the system shown in FIG. 14, the method of the present invention is applied to the data communication between a tuner 20 receiving TV broadcasting and the like, and a monitor 40 such as a TV monitor . Namely, contents such as broadcasting data which the tuner 20 receives via an antenna are wireless-transmitted by utilizing the transmitting apparatus 25 in the tuner 20 and the transmitting unit 26. The transmitting apparatus 25 in the tuner 20 corresponds to the transmitting apparatus 100 shown in FIG. 2A, and the transmitting unit 26 corresponds to the light transmitting unit 120. Thus, the transmitting unit 26 utilizes the optical device such as the LED.

The receiving apparatus 42 corresponds to the receiving apparatus 200 shown in FIG. 1, for example, and receives the transmitted light-modulated wave and executes the demodulating process to obtain the original data of the contents. The original data is displayed on the monitor 40. According to the above embodiment, the contents including image data can be transmitted because the high-speed data transmission is possible by utilizing the multi-value modulating system, such as the 64 QAM, as the modulating-demodulating system.

The transmitting apparatus 25 can be realized as a computer apparatus including a CPU 31, an ROM 32 and an RAM 33 as shown in FIG. 14. If a program, which realizes the process of the modulating unit 110 shown in FIG. 3A as the digital signal processing, is prepared and is executed by the CPU 31, the computer apparatus can work as the transmitting apparatus 25. Namely, a predetermined program, which is stored in the ROM 32 , is written to the RAM 33 as the need arises, and the CPU 31 executes the signal processing according to the program. The RAM 33 can work as a work memory during the modulating process and other process. Since this program is designed to determine the frequency band to be used in the data transmission according to the above-described method,the data transmission without distortion can be realized, even though the optical device such as the LED is utilized in the transmitting unit 26.

**Claims**

1. A modulating apparatus (110) for optical communication which modulates a carrier by a modulation signal and generates a modulated wave to be supplied to a light emitting diode (122), wherein modulation is executed to satisfy:

$$fd > f1,$$

$$fu < f2,$$

and

$$fd > fu/2$$

when a lower limit frequency of a use-permitted frequency band is f1 [Hz] , an upper limit frequency of the use-permitted frequency band is f2[Hz], a lower limit side band of the modulated wave is fd[Hz] , and an upper limit side band of the modulated wave is fu[Hz] .

2. A modulating apparatus (110) for optical communication which modulates a carrier by a modulation signal and generates a modulated wave to be supplied to a light emitting diode (112), wherein modulation is executed to satisfy:

$$fd > f1,$$

$$fu < f2,$$

and

$$fc > 3(1+\alpha) \, fsr/2$$

when a lower limit frequency of a use-permitted frequency band is f1[Hz], an upper limit frequency of the use-permitted frequency band is f2 [Hz] , a carrier frequency is fc [Hz] , a rolloff factor is $\alpha$, and a symbol rate of the modulation signal is fsr.

3. The modulating apparatus (110) according to claim 1 or 2, wherein the modulation is executed according to a modulating system including amplitude modulation.

4. A transmitting (100) apparatus comprising:

a modulating apparatus (110) for optical communication which modulates a carrier by a modulation signal and generates a modulated wave to be supplied to a light emitting device, wherein modulation is executed to satisfy:

$$fd > f1,$$

$$fu < f2,$$

and

$$fd > fu/2$$

when a lower limit frequency of a use-permitted frequency band is f1[Hz], an upper limit frequency of the use-permitted frequency band is f2 [Hz] , a lower limit side band of the modulated wave is fd[Hz] , and an upper limit side band of the modulated wave is fu[Hz]; and
a light transmitting unit (120) having the light emitting device (122) which is driven by the modulated wave generated by the modulating apparatus and outputs a light-modulated wave (10).

5. A transmitting apparatus (100) comprising:

   a modulating apparatus (110) for optical communication which modulates a carrier by a modulation signal and generates a modulated wave to be supplied to a light emitting device, wherein modulation is executed to satisfy:

$$fd > f1,$$

$$fu < f2,$$

   and

$$fc > 3(1+\alpha) \, fsr/2$$

   when a lower limit frequency of a use-permitted frequency band is f1 [Hz] , an upper limit frequency of the use-permitted frequency band is f2 [Hz] , a carrier frequency is fc [Hz] , a rolloff factor is $\alpha$, and a symbol rate of the modulation signal is fsr; and
   a light transmitting unit (120) having the light emitting device (122) which is driven by the modulated wave generated by the modulating apparatus and outputs a light-modulated wave (10) .

6. A computer program for making a computer function as a modulating apparatus (110), by executing the computer program, for optical communication which modulates a carrier by a modulation signal and generates a modulated wave to be supplied to a light emitting device (122) wherein modulation is executed to satisfy:

$$fd > f1,$$

$$fu < f2,$$

   and

$$fd > fu/2$$

   when a lower limit frequency of a use-permitted frequency band is f1 [Hz] , anupper limit frequency of the use-permitted frequency band is f2 [Hz] , a lower limit side band of the modulated wave is fd[Hz], and an upper limit side band of the modulated wave is fu[Hz].

7. A computer program for making a computer function as a modulating apparatus (110) , by executing the computer program, for optical communication which modulates a carrier by a modulation signal and generates a modulated wave to be supplied to a light emitting device (122) , wherein modulation is executed to satisfy:

$$fd > f1,$$

$$fu < f2,$$

and

$$fc > 3(1+\alpha) fsr/2$$

when a lower limit frequency of a use-permitted frequency band is f1 [Hz] , an upper limit frequency of the use-permitted frequency band is f2 [Hz] , a carrier frequency is fc[Hz] , a rolloff factor is $\alpha$, and a symbol rate of the modulated signal is fsr.

# FIG. 1

LEVEL

USE-PERMITTED FREQUENCY BAND

f1    fd                                                    fu    f2

FREQUENCY
[Hz]

MODULATED WAVE

EP 1 401 127 A2

EP 1 401 127 A2

**FIG. 2A**

100

TRANSMITTING
APPARATUS

10

200

RECEIVING
APPARATUS

**FIG. 2B**

100

DATA

MODULAT
-ING UNIT

LIGHT
TRANSMITT
-ING UNIT

10

200

LIGHT
RECEIVING
UNIT

DEMODU
-LATING
UNIT

DATA

110     M1Tx     120

220     M1Rx     210

EP 1 401 127 A2

**FIG. 3A**

<u>110</u>

DATA ─── | MODULATION PROCESSING UNIT (111) | ─── | ROOT NYQUIST FILTER (112) | ─── | UP CONVERTER (113) | ─── | D/A (114) | ─── | SMOOTHING FILTER(LPF) (115) | ─── MODULATED WAVE M1Tx

**FIG. 3B**

<u>210</u>

MODULATED WAVE M1Rx ─── | ANTI-ALIASING FILTER (LPF) (211) | ─── | A/D (212) | ─── | DOWN CONVERTER (213) | ─── | ROOT NYQUIST FILTER (214) | ─── | DEMODULATION PROCESSING UNIT (215) | ─── DATA

## FIG. 4A

120

MODULATED WAVE M1Tx → VOLTAGE-CURRENT CONVERTER (121) → (122) → (123) → LIGHT-MODULATED WAVE L1

## FIG. 4B

220

LIGHT-MODULATED WAVE L1 → (221) → (222) → CURRENT-VOLTAGE CONVERTER (223) → AMPLIFIER (224) → MODULATED WAVE M1Rx

EP 1 401 127 A2

# FIG. 5

CARRIER FREQUENCY: fc [Hz]
ROLLOFF FACTOR: $\alpha$
SYMBOL RATE: fsr [Hz]
UPPER LIMIT SIDE BAND: $fu = fc + 0.5(1+\alpha)fsr$ [Hz]
LOWER LIMIT SIDE BAND: $fd = fc - 0.5(1+\alpha)fsr$ [Hz]
USE FREQUENCY BAND WIDTH: $fw = fu - fd = (1+\alpha)fsr$ [Hz]

EP 1 401 127 A2

**FIG. 6A**

110

DATA — 111 MODULATION PROCESSING UNIT — 116 LOWPASS FILTER — 113 UP CONVERTER — 114 D/A — 115 SMOOTHING FILTER (LPF) — MODULATED WAVE M1Tx

**FIG. 6B**

210

MODULATED WAVE M1Rx — 211 ANTI-ALIASING FILTER (LPF) — 212 A/D — 213 DOWN CONVERTER — 216 LOWPASS FILTER — 215 DEMODULATION PROCESSING UNIT — DATA

# FIG. 7

UPPER LIMIT SIDE BAND:    fu [Hz]
LOWER LIMIT SIDE BAND:    fd [Hz]

LEVEL

USE
FREQUENCY
BAND

CROSS MODULATED WAVE

FREQUENCY
[Hz]

fd

fu

0

CROSS
MODULATED WAVE

fu−fd

fd+fd

fu+fu

EP 1 401 127 A2

FIG. 8A

<u>110</u>

DATA — MODULATION PROCESSING UNIT (111) — LOWPASS FILTER (116) — D/A (114) — SMOOTHING FILTER(LPF) (115) — UP CONVERTER (113) — MODULATED WAVE M1Tx

FIG. 8B

<u>210</u>

MODULATED WAVE M1Rx — DOWN CONVERTER (213) — ANTI-ALIASING FILTER(LPF) (211) — A/D (212) — LOWPASS FILTER (216) — DEMODULATION PROCESSING UNIT (215) — DATA

EP 1 401 127 A2

# FIG. 9

100

200

DATA
(150Mbps)

| 64QAM MODULATING UNIT | LED LIGHT TRANSMITTING UNIT |

10

| PHOTODIODE LIGHT RECEIVING UNIT | 64 QAM DEMODU- LATING UNIT |

DATA
(150Mbps)

130    M1Tx    140

240    M1Rx    230

EP 1 401 127 A2

**FIG. 10A**

130

DATA
(150Mbps) —— | 64 QAM
IQ MAPPING | 131 —— | ROOT
NYQUIST
FILTER | 132 —— | UP
CONVERTER | 133 —— | D/A | 134 —— | SMOOTHING
FILTER (LPF) | 135 —— MODULATED
WAVE M1Tx

**FIG. 10B**

230

MODULATED
WAVE M1Rx —— | ANTI-
ALIASING
FILTER (LPF) | 231 —— | A/D | 232 —— | DOWN
CONVERTER | 233 —— | ROOT
NYQUIST
FILTER | 234 —— | 64 QAM
DEMODULATION
PROCESSING
UNIT | 235 —— DATA

EP 1 401 127 A2

FIG. 11A

140

141

142

143

MODULATED
WAVE M1Tx

VOLTAGE
-CURRENT
CONVERTER

LIGHT-MODULATED
WAVE L1

FIG. 11B

240

241

243

244

LIGHT-MODULATED
WAVE L1

242

CURRENT-
VOLTAGE
CONVERTER

AMPLIFIER

MODULATED
WAVE M1Rx

# FIG. 12

CARRIER FREQUENCY: $fc=50MHz$
UPPER LIMIT SIDE BAND: $fu=65MHz$
LOWER LIMIT SIDE BAND: $fd=35MHz$
SYMBOL RATE : $fsr=25MHz$
ROLLOFF FACTOR: $\alpha=0.2$

LEVEL

30MHz

CROSS
MODULATED WAVE

FREQUENCY
[MHz]

35
fd

65
fu

50MHz

O

30
fu−fd

70
fd+fd

130
fu+fu

CROSS MODULATED
WAVE

USE FREQUENCY
BAND

EP 1 401 127 A2

# FIG. 13

LEVEL
[LINEAR]

$fsr/2 + \alpha\, fsr/2$
$= (1+\alpha)\, fsr/2$

1

0   $\alpha$   1

ROLLOFF
FACTOR

0.5

FREQUENCY
[MHz]

−25
−fsr

−12.5
−fsr/2

0Hz

12.5
fsr/2

25
fsr

SYMBOL
RATE/2

SYMBOL
RATE

EP 1 401 127 A2

# FIG. 14

EP 1 401 127 A2